# EUROPÄISCHE PATENTSCHRIFT

(11) **EP 0 454 991 B1**
(45) Veröffentlichungstag und Bekanntmachung des Hinweises auf die Patenterteilung: **25.01.1995**
(21) Anmeldenummer: 91104506.0
(22) Anmeldetag: 22.03.1991
(51) Int. Cl.: B29C 45/17

(54) **Kunststoff-Spritzgiesseinheit**
Plastic injection moulding unit
Unité de moulage par injection de matière plastique

(30) Priorität: 04.05.1990 DE 4014311
(43) Veröffentlichungstag der Anmeldung: 06.11.1991
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- EP-A- 0 316 561
- DE-A- 2 027 236
- PATENT ABSTRACTS OF JAPAN vol. 13, no. 94 (M-804)(3442)6. März 1989 & JP-A-63 286 316 ( FANUC )

## Beschreibung

Die Erfindung bezieht sich auf eine Kunststoff-Spritzgießeinheit entsprechend dem Oberbegriff des Patentanspruches 1.

Bei einer bekannten Kunststoff-Spritzgießeinheit dieser Art (DE-A-37 35 419) ist im Trägerblock je zwischen übereinander liegenden Bohrungen ein vertikaler Spalt eingebracht. Die Breite des Spaltes kann mittels einer horizontalen Spannschraube im Gefolge einer reversiblen Deformation des Trägerblockes im Bereich des Spaltes geringfügig verringert werden. Dadurch ist es möglich, die in den Bohrungen aufgenommenen hydraulischen Antriebseinheiten durch Gewindeverkeilung axial festzulegen, was allerdings den Einsatz eines relativ schwereren Gerätes zum Anziehen der Spannschraube erfordert. Vor der Festlegung befinden sich die Zylinder der hydraulischen Antriebseinheiten in aller Regel nicht in einer koaxialen Position zu den Mittelachsen der zugehörigen Bohrungen. Vielmehr sind geringfügige Abweichungen von der Koaxialität zu verzeichnen. Diese Abweichungen bewegen sich in Grenzen, welche das Spiel zwischen den Innengewinden der Bohrungen und den Außengewinden der Zylinder zuläßt und sind durch relativ starke Kippmomente bedingt. Die Kippmomente, die sich nicht nur nach Größe, sondern auch nach ihrer Richtung unterscheiden, resultieren daraus, daß über die Innen- und Außengewinde Aggregate verbunden sind, deren Schwerpunkte weit vor oder hinter den Gewinden liegen. Ein aus dem Trägerblock und dem Plastifizierzylinder bestehendes Aggregat ist über die Innengewinde der Bohrungen auf den Außengewinden der Zylinder der Antriebsein heiten für die ganze Spritzgießeinheit abgestützt. Ein aus den Antriebseinheiten für die Förderschnecke, einer diese Antriebseinheiten rückseitig verbindenden Einspritzbrücke mit Rotationsantrieb und aus der Förderschnecke zusammengesetztes weiteres Aggregat hängt gewissermaßen über die Außengewinde der Zylinder der Antriebseinheiten in den Innengewinden der Trägerbrücke. In jedem Fall werden vor der Gewindeverkeilung vorhandene Abweichungen von der Koaxialität durch die Verkeilung bzw. Fixierung gewissermaßen konserviert. In diesem Zusammenhang ist darauf hinzuweisen, daß sich auch geringfügige Abweichungen von der Koaxialität bei den hydraulischen Antriebszylindern für die ganze Spritzgießeinheit wegen der Länge des Plastifizierzylinders erhebliche Spannungen im System verursachen können. Das gleiche gilt mit bezug auf die Abweichungen von der Koaxialität bei den hydraulischen Antriebseinheiten für die Förderschnecke, die mit der Einspritzbrücke und damit mit dem Rotationsmotor fest verbunden ist. Auch hier geben geringfügige Abweichungen der hydraulischen Antriebseinheiten für die Förderschnecke eine beträchtliche Tendenz zur Positionsveränderung am vorderseitigen Ende der Förderschnecke. Solche Spannungen treten auch auf, wenn der Plastifizierzylinder und/oder der Trägerblock über rollende Organe auf einem Maschinengestell abgestützt sind. Sie wirken sich dann im wesentlichen zwischen den Stützbereichen in den Gewinden einerseits und den Stütz- und Führungsorganen von Plastifizierzylinder und Trägerblock andererseits aus.

Andererseits ist es möglich, die erörterten Abweichungen von der Koaxialität zu vernachlässigen, weil sie im normalen Spritzbetrieb praktisch nicht erkennbar sind und zunächst auch keine besonderen Auswirkungen zeitigen, wenn der Plastifizierzylinder abgestützt und seitlich geführt ist. Die Förderschnecke ist ohnehin im Plastifizierzylinder bezüglich des Verlaufs ihrer Achse weitgehend festgelegt, so daß eine Verbiegung der Förderschnecke kaum erkennbar ist. Die vorgenannten Abweichungen von der Koaxialität wirken sich somit im wesentlichen in nicht erkennbaren Spannungen im Gefüge des Gesamtsystems der Spritzgießeinheit aus. Langzeitversuche haben nun ergeben, daß diese Spannungen nicht ohne Einfluß auf die Lebensdauer der betroffenen Funktionseinheiten und Elemente sind. Dies gilt insbesondere auch für die Förderschnecke. Auch eine minimale durch die Abweichung von der Koaxialität bedingte Verbiegung im Plastifizierzylinder führt bei Rotation der Förderschnecke zu einer fortdauernden mechanischen Beanspruchung des Materials. Hinzu kommt, daß Förderschnecken oftmals aufgrund einer Oberflächenveredelung mit spröden Oberflächen versehen sind, deren Haltbarkeit erheblich beeinträchtigt sein kann.

Das Problem mangelnder Koaxialität im obigen Sinne tritt stets da auf, wo ein Aggregat mit Außengewinde im Innengewinde eines tragenden anderen Aggregates aufgenommen ist und ein starkes Kippmoment vorliegt.

Zur Erreichung einer Parallelität zwischen einer beweglichen und einer stationären Platte bei einer Formschließeinheit ist es aus JP-A-63- 286 316 bereits bekannt, die über einen Gewindebolzen verbundenen Platten durch seitlich im gleichen Abstand davon befindliche Spannbolzen hinsichtlich ihrer Parallelität einzujustieren. Der mittlere Bolzen ist dabei an einer Lagerplatte beweglich gelagert, so daß sich eine Fixierung erst durch Anziehen der Spannbolzen ergibt. Aufgrund der seitlichen Anordnung kann jedoch nur eine Parallelität in einer Achsrichtung erzeugt werden.

Um Führungssäulen spielfrei in Aufnahmebohrungen zu justieren, wird in der DE-A-20 27 236 vorgeschlagen, einen Doppelkonusring vorzusehen, wobei ein Außenkonus in einen Innenkonus eintaucht. Randständig um den Konus befinden sich Zug- und Druckbolzen, die eine Justierung ermöglichen. Um jedoch die gewünschte Justage zu erzielen, wird der Doppelkonusring radial dehnbar ausgebildet, was durch aufwendig herzustellende Radialschlitze bewirkt wird.

Ausgehend von der Erkenntnis, daß die Langzeitwirkungen von Spannungen im Gesamtgefüge die Lebensdauer beeinträchtigen, liegt der Erfindung die Aufgabe zugrunde, eine Spritzgießeinheit der eingangs genannten Gattung derart weiterzubilden, daß die aus einer Abweichung von der Koaxialität resultierenden Spannungen im Gesamtgefüge durch eine einfache mit tragbarem Werkzeug durchzuführenden Maßnahme minimierbar sind.

Diese Aufgabe wird durch die im Anspruch 1 aufgeführten Merkmale gelöst.

Zweckdienliche Weiterbildungen der Erfindung ergeben sich aus den abhängigen Ansprüchen 2 bis 6.

Bei einer solchen erfindungsgemäßen Ausbildung kann der Winkel zwischen der Achse des Außengewindes und der Achse des Innengewindes mit sehr geringem Montageaufwand willkürlich verändert werden.

Unterliegen die über die Gewinde miteinander verbundenen Einheiten je einem starken Kippmoment, so kann es erforderlich sein, den genannten Winkel (Abweichungswinkel) nicht nur zu minimieren, sondern in einem dem Kippmoment entgegenwirkenden Sinne zu verändern bzw. zu vergrößern. Dies gilt beim zeichnerisch dargestellten Ausführungsbeispiel insbesondere für die die Förderschnecke antreibenden hydraulischen Antriebseinheiten, die rückseitig durch eine Einspritzbrücke, durch einen Rotationsmotor und die Förderschnecke stark belastet sind.

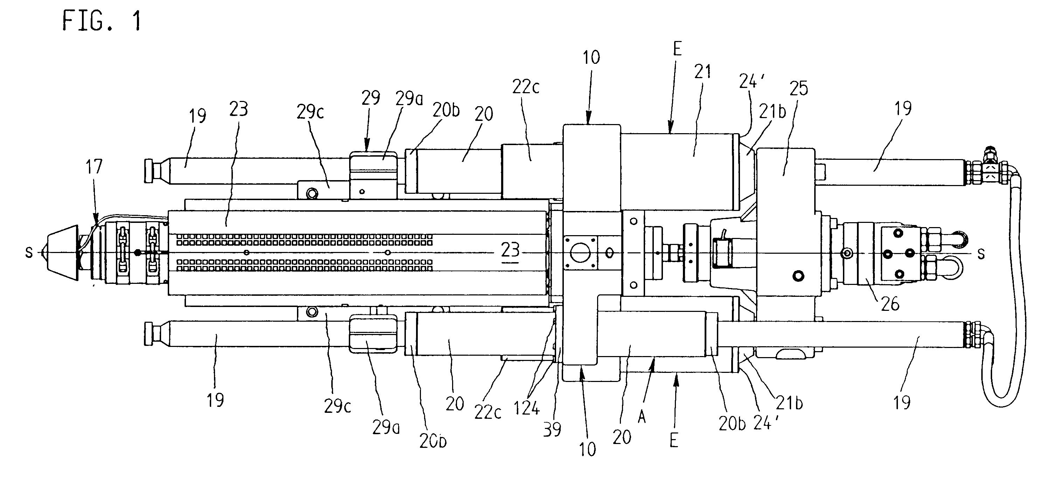

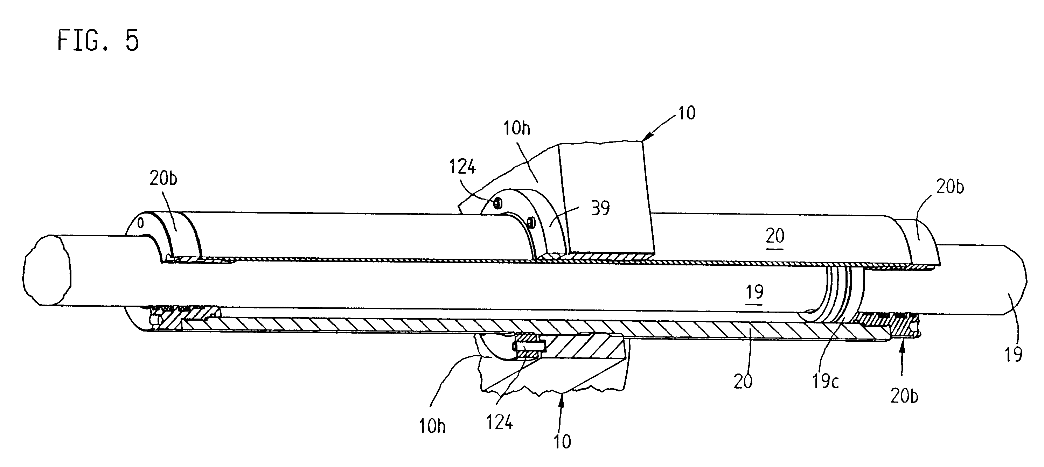

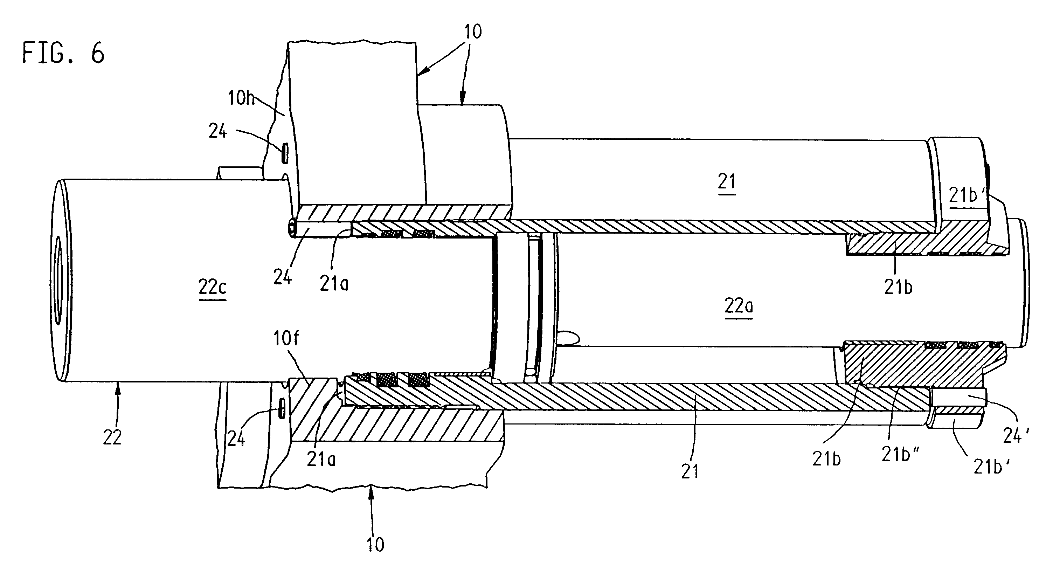

Die jeweils erforderliche Einstellung des Abweichungswinkels kann durch das aufeinanderfolgende, unterschiedliche Anziehen bzw. Lösen der einzelnen Gewindebolzen erreicht werden. Sie erfolgt somit in einzelnen kleinen Schritten unter Einsatz eines verhältnismäßig geringen Drehmomentes bei relativ geringer Kraftanwendung. Dieser Umstand ist von großer praktischer Bedeutung, weil das Montagepersonal , insbesondere wenn es außerhalb des Fertigungsbetriebes tätig wird, z.B. bei der Installation von Maschinen in den Betrieben der Käufer, ohne größere Schraubapparate mit Kraftantrieb auskommen kann, zumal solche Apparate wegen ihres großen Gewichtes mittels eines Fahrzeuges an den Einsatzort gebracht werden müßten. Solche Schraubapparate wären z.B. unvermeidlich bei einer Gewindeverkeilung mittels eines Gewinderinges (vergl. Bezugszeichen 39 in Fig. 1,5,6) als Kontermutter. Die Vorteile einer manuellen Handhabung bei Montage und Service fallen besonders ins Gewicht bei der Aufstellung und beim Service von Kunststoff-Spritzgießmaschinen in entlegenen Gegenden, z.B. in Ländern der 'Dritten Welt' mit gering entwickeltem Straßennetz. Diese Vorteile führen aber in jedem Fall zu einer wesentlichen Senkung der Montage- und Servicekosten , besonders wenn die zu betreuenden Maschinen zerstreut positioniert und relativ schwer zugänglich sind.

Nachfolgend wird ein Ausführungsbeispiel der Erfindung erläutert:
In den Zeichnungen zeigen:
- Fig. 1,2: Die Spritzgießeinheit in Draufsicht und Seitenansicht,
- Fig. 3: den Trägerblock der Spritzgießeinheit in perspektivischer Darstellung,
- Fig. 4: eine Spritzgießeinheit in Draufsicht im teilweisen horizontalen Schnitt durch die oberen Antriebseinheiten ohne Plastifizierzylinder und ohne Förderschnecke,
- Fig. 5,6: Ausschnitte aus der Spritzgießeinheit gemäß Fig. 4 im Bereich ihrer hydraulischen Antriebseinheiten in vergrößerter und perspektivischer Darstellung, teilweise aufgeschnitten,

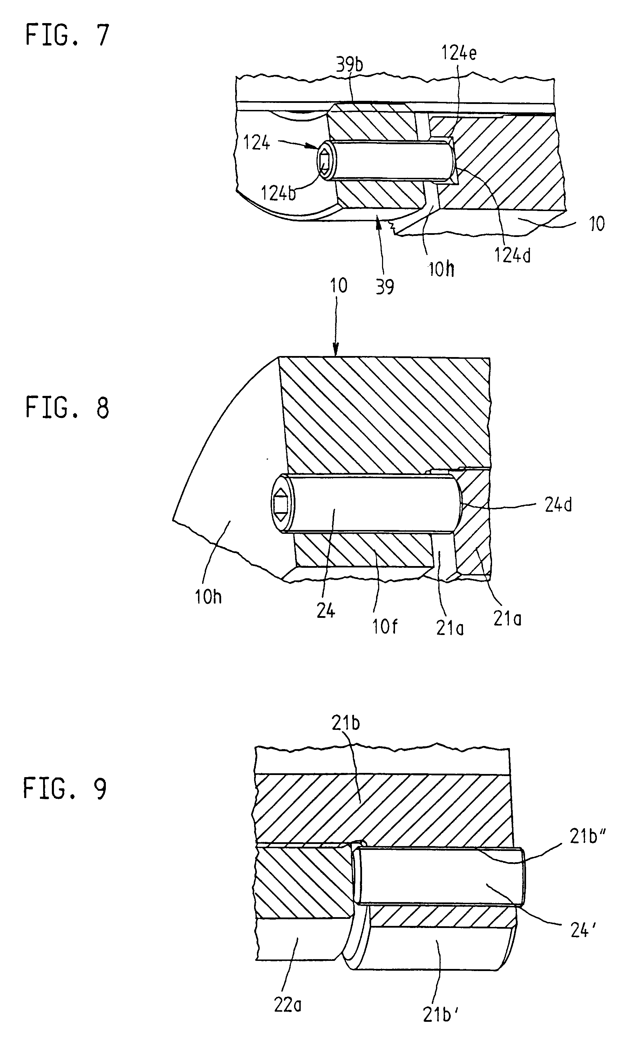

- Fig. 7,8: Ausschnitte aus den Fign. 5 und 6 je im Bereich eines Spannbolzens in vergrößerter Darstellung und
- Fig. 9: einen Ausschnitt aus Fig. 6 im Bereich des rückwärtigen Zylinderdeckels in vergrößerter Darstellung.

In den Fign. 1-3 sind die erfindungsgemäßen Merkmale an einer Spritzgießeinheit verwirklicht, welche der aus der DE-A-37 35 419 bekannten gattungsgemäßen Spritzgießeinheit entspricht.

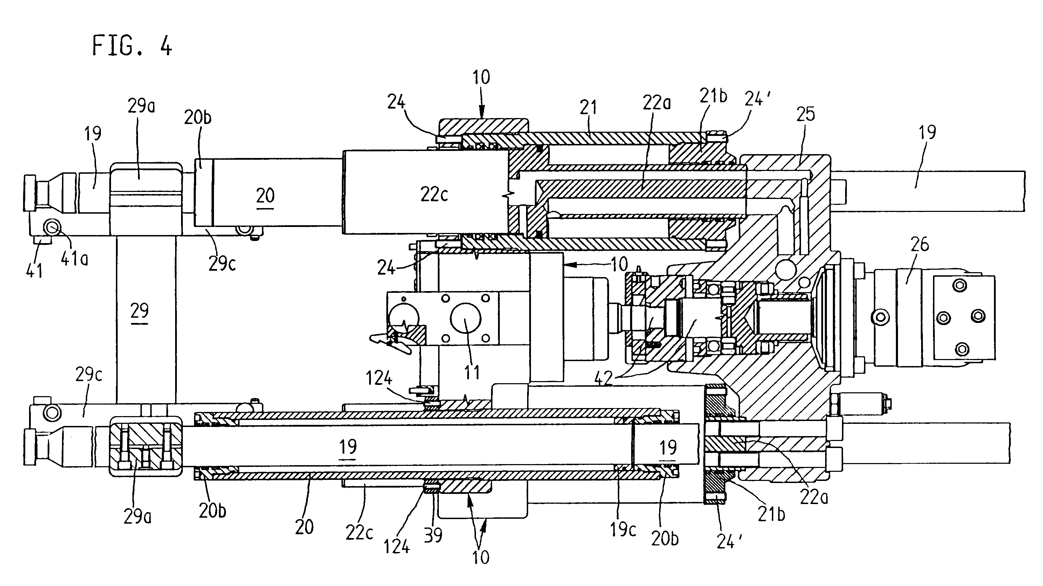

Die Fig. 4 zeigt eine Spritzgießeinheit, die sich in den Abmessungen ihrer Bauteile geringfügig von der Spritzgießeinheit nach den Fign. 1-3 unterscheidet. Diese Unterschiede sind jedoch für die Erfindung und ihre Darstellung ohne Bedeutung. In der nachfolgenden Beschreibung sind daher diese Unterschiede nicht berücksichtigt.

Der den Plastifizierzylinder 17 in einer zentralen Bohrung 12 aufnehmende Trägerblock 10 weist mehrere parallel zur Spritzachse s-s verlaufende, mit Innengewinde versehene, Bohrungen 14;13 auf. In den Bohrungen sind hydraulische Antriebseinheiten A; E aufgenommen, die annäherungsweise koaxial zu den Achsen der Bohrungen liegen und je von einem Zylinder 20; 21 umschlossen sind. Die Zylinder 20; 21 der Antriebseinheiten A; E stehen über Außengewinde 20c; 21f mit den Innengewinden der Bohrungen 14; 13 im Eingriff. Aufgrund ihrer Abweichungen von der Koaxialität können die Zylinder einen Abweichungswinkel von bis zu 2° zu den Achsen n-n; m-m der Bohrungen 14; 13 einschließen.

Im konkreten zeichnerisch dargestellten Ausführungsbeispiel sind zwei hydraulische Antriebseinheiten zum Verschieben der Kunststoff-Spritzgießmaschine auf axial feststehenden Führungsstangen 19 über ihre Zylinder 20 mit den Innengewinden der Bohrungen 14 verschraubt. Zwei weitere hydraulische Antriebseinheiten zum Verschieben der Förderschnecke sind über ihre Zylinder 21 mit den Innengewinden der Bohrungen 13 verschraubt. Die Achsen der Antriebseinheiten A;E schließen entsprechend einer durch ein Kippmoment bedingten Abweichung von der Koaxialität einen Abweichungswinkel zu den Achsen der Bohrungen 14; 13 ein.

Eine Einrichtung zum Fixieren der Antriebseinheiten A; E in ihren Bohrungen 14; 13 und zum Verändern des Abweichungswinkels umfaßt mehrere annäherungsweise parallel zur Spritzachse s-s auf einer Kreislinie angeordnete Gewindebolzen 124; 24. Durch die Gewindebolzen sind die Gewindegänge im Trägerblock einerseits und der im Trägerblock aufgenommene Zylinder 20; 21 andererseits in entgegengesetzter Richtung miteinander verkeilbar. Die Größe der Verkeilung ist durch unterschiedliches Anziehen der einzelnen Gewindebolzen 124; 24 nach Größe und Umfangsverteilung unterschiedlich bemeßbar. Dadurch ist der Abweichungswinkel nach Größe und Richtung willkürlich veränderbar. Die Zylinder 20 der Antriebseinheiten für die ganze Spritzgießeinheit durchgreifen ihre Bohrungen 14 vollständig und überragen den Trägerblock vorderseitig und rückseitig. Die zugehörigen Gewindebolzen 124 sind an einem Gewindering 39 axial abgestützt, der mit einem Innengewinde 39b mit einem Außengewinde des Zylinders 20 im Eingriff steht. Die mit dem Gewindering 39 verschraubten Gewindebolzen 124 liegen mit ihren Stirnkanten 124d an der Stirnfläche 10h des Trägerblockes 10 an. Dabei sind die Stirnkanten 124d in Vertiefungen 124e aufgenommen.

Die Zylinder 21 der Antriebseinheit E zur Verschiebung der Förderschnecke tauchen mit vorderen, mit Außengewinde 21 f versehenen, Endabschnitten in Abschnitte der Bohrungen 13 ein. Dadurch ist die Stirnfläche 21a des Zylinders 21 von einem Innenflansch 10f des Trägerblockes 10 hintergriffen. Die Gewindebolzen 24 durchsetzen den Innenflansch 10f und stehen mit ihren Außengewinden mit Innengewinden des Innenflansches 10f im Eingriff. Die Gewindebolzen 24 liegen mit ihren Stirnkanten 24d an der Stirnfläche 21a des Zylinders 21 an. Die hydraulischen Antriebseinheiten A zum Verschieben der Spritzgießeinheit als Ganzes liegen symmetrisch zu einer Ebene e-e, die einen Winkel zur Hori-zontalen einschließt. Das gleiche gilt für die Bohrungen 13 zur Aufnahme der hydraulischen Antriebseinheiten E zum Verschieben der Förderschnecke, die symmetrisch zu einer Ebene f-f liegen. Die Kolben 19c der Antriebseinheiten A sitzen auf den axial feststehenden Führungsstangen 19 fest auf.

Im konkreten zeichnerischen Ausführungsbeispiel sind zwei hydraulische Antriebseinheiten A zum Verschieben der Spritzgießeinheit auf den Führungsstangen 19 und zwei hydraulische Antriebseinheiten E zum axialen Verschieben der Förderschnecke 35 vom Plastifizierzylinder 17 in symmetrisch zur Spritzachse s-s angeordneten Bohrungen 14;13 des Trägerblocks 10 aufgenommen. Die Antriebseinheiten E zum Verschieben der Förderschnecke sind rückseitig über eine Einspritzbrücke 25 miteinander verbunden. Die Einspritzbrücke 25 trägt den Rotationsmotor 26 mit Antriebsspindel 42 und die Förderschnecke 35. Der Schwerpunkt des aus den Antriebseinheiten E, dem Rotationsmotor 26, der Antriebsspindel 42 und der Förderschnecke 35 zusammengesetzten Aggregates liegt in relativ großem Abstand zum Abstützbereich der Bohrungen 13 im Trägerblock 10, so daß sich in den miteinander verschraubten Gewinden der Antriebseinheiten E und der Trägerbrücke 10 ein erhebliches Kippmoment ergibt.

Ein vorderseitiger Abschnitt 22c eines im Zylinder 21 der Antriebseinheit E angeordneten Einspritzkolbens 22 überragt die Stirnfläche 10h des Trägerblockes 10 nach vorne. Ein rückseitiger Abschnitt 22a des Einspritzkolbens 22 geringeren Durchmessers als der vorderseitige Abschnitt 22c durchgreift einen rückseitigen Zylinderdeckel 21b. Dieses ist mittels Außengewinde 21b'' mit einem Innengewinde des Zylinders 21 verschraubt. Der Zylinderdeckel 21b übergreift die rückwärtige Stirnfläche des Zylinders 21 mit einem Radialflansch 21b' vollständig. Zur Fixierung der Gewindegänge von Zylinder 21 und Zylinderdeckel 21b sind je etwa auf einer Kreislinie im Radialflansch 21b' angeordnete Gewindebolzen 24' vorgesehen. Somit ist eine Gewindeverkeilung im Gefolge einer axialen Vorspannung durch das Anziehen mehrerer Gewindebolzen 24', also in kleinen Schritten je bei Anwendung relativ geringer Drehmomente möglich. Eine axiale Gewindeverkeilung mittels eines mit dem Mantel des Zylinders 21 verschraubten als Kontermutter wirkenden Gewinderinges würde auch hier den Einsatz größerer Schraubgeräte erfordern.

Wie aus Fig. 4 ersichtlich, kann der Plastifizierzylinder mittels Stützrollen 41 abgestützt und mittels Führungsrollen 41a seitlich geführt sein. Die genannten Stütz- und Führungsrollen sind in Auslegern 29c eines U-förmigen, stationären, auf einem Maschinenfuß abgestützten Stützbügels 29 angeordnet. Der Stützbügel 29 umschließt mit Muffen 29a seiner vertikalen Schenkel die Führungsstange 19.

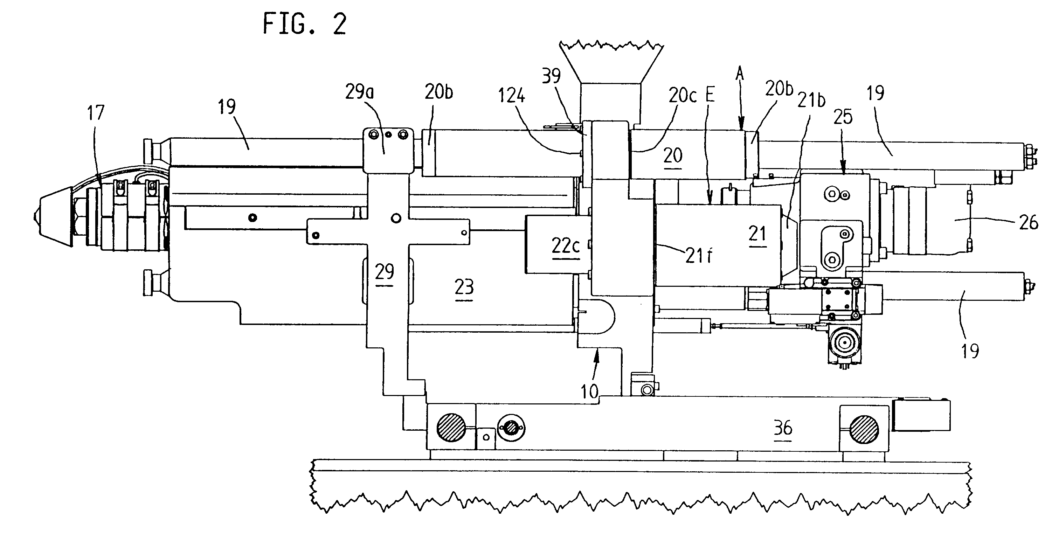

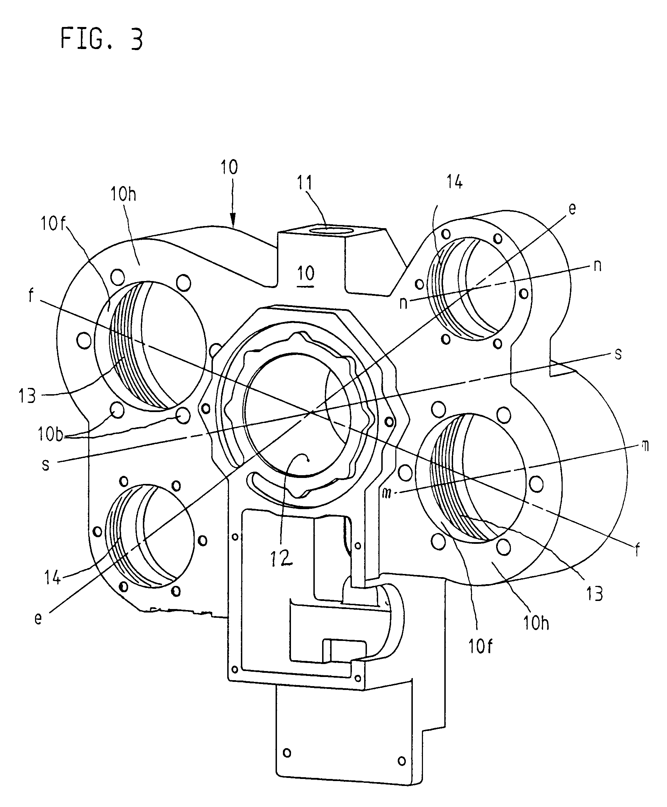

Wie insbesondere aus Fig. 2 in Verbindung mit Fig. 3 erkennbar, kann auch der Trägerblock 10 über einen Ausleger und ein rollendes Element 32 auf dem Maschinenfuß 36 abgestützt sein. Der Plastifizierzylinder 17 ist von einem Schutzgehäuse 23 umschlossen. Der Plastifizierzylinder 17 als solcher ist in einer zentralen Bohrung 12 (Fig. 3) aufgenommen und im Trägerblock axial verriegelbar. Das Kunststoffmaterial gelangt über eine Bohrung 11 im Trägerblock in den Plastifizierzylinder.

## Patentansprüche

1. Kunststoff-Spritzgießeinheit mit einem den Plastifizierzylinder (17) aufnehmenden Trägerblock (10), der wenigstens eine parallel zur Spritzachse (s-s) verlaufende, mit Innengewinde versehene Bohrung (14;13) aufweist, mit einer in der Bohrung (14;13) aufgenommenen zylindrischen hydraulischen Antriebseinheit (A;E), welche über ein Außengewinde mit dem Innengewinde der Bohrung (14;13) im Eingriff steht, wobei die Achse der Antriebseinheit (A;E) entsprechend einer durch ein Kippmoment bedingten Abweichung von der Koaxialität zu der Achse (n-n;m-m) der Bohrung einen Abweichungswinkel einschließt,
und mit einer die Gewindegänge von Innen- und Außengewinde mittels wenigstens eines Gewindebolzens (124;24) miteinander verkeilenden Einrichtung zum Fixieren der Antriebseinheit (A; E) in der Bohrung (14; 13),
dadurch gekennzeichnet, daß die Einrichtung zum Fixieren der Antriebseinheit (A; E) in der Bohrung (14; 13) annäherungsweise parallel zur Spritzachse (s-s ) etwa auf einer Kreislinie um die Achse (m-m;n-n) der Bohrung (14; 13) angeordnete Gewindebolzen (124;24) umfaßt, wobei durch unterschiedlich starkes Anziehen einzelner Gewindebolzen (124;24) gegebenenfalls in entgegengesetzter Richtung die Gewindegänge von Innengewinde der Bohrung (14;13) und Außengewinde der Antriebseinheit (A; E) zur Veränderung des Abweichungswinkels entlang der Kreislinie in unterschiedlichem Maße verkeilbar sind.

2. Kunststoff-Spritzgießeinheit nach Anspruch 1, dadurch gekennzeichnet, daß zwei Antriebseinheiten (A) zum Verschieben der Spritzgießeinheit auf axial feststehenden und als Kolbenstangen dienenden Führungsstangen (19) in den Bohrungen (14) aufgenommen sind, welche Antriebseinheiten (A) den Trägerblock (10) sowohl vorderseitig, als auch rückseitig überragen, wobei die einer Antriebseinheit (A) zugeordneten Gewindebolzen (124) mit einem am Zylinder (20) der Antriebseinheit (A) abgestützten Gewindering (39) in Eingriff stehen und mit ihren Stirnkanten am Trägerblock (10) anliegen (Fig. 5,7).

3. Kunststoff-Spritzgießeinheit nach Anspruch 2, dadurch gekennzeichnet, daß der Gewindering (39) mittels eines Innengewindes (39b) mit dem Außengewinde (20c) des Zylinders (20) im Eingriff steht und die Stirnkanten (124d) der Gewindebolzen (124) in Vertiefungen (124e) des Trägerblockes (10) an dessen Stirnfläche (10h) eintauchen.

4. Kunststoff-Spritzgießeinheit nach Anspruch 1, dadurch gekennzeichnet, daß zwei hydraulische Antriebseinheiten (E) zum axialen Verschieben der Förderschnecke im Plastifizierzylinder (17) je mit einem vorderen, mit dem Außengewinde (21f) versehenen Endabschnitt in einen Abschnitt der zugehörigen Bohrung (13) eintauchen und die Stirnflächen (21a) der Zylinder (21) der Antriebseinheiten (E) je von einem Innenflansch (10f) des Trägerblockes (10) übergriffen sind, wobei die Gewindebolzen (24) mit diesen Innenflanschen (10f) im Eingriff stehen und mit ihren Stirnkanten (24d) an den Stirnflächen (21a) der Zylinder (21) anliegen (Fig. 6,8).

5. Kunststoff-Spritzgießeinheit nach einem der Ansprüche 1 oder 4, dadurch gekennzeichnet, daß ein vorderseitiger Abschnitt (22c) eines im Zylinder (21) angeordneten Einspritzkolbens (22) der Antriebseinheit (E) zum axialen Verschieben der Förderschnecke im Plastifizierzylinder (17) die Stirnfläche (10h) des Trägerblockes (10) nach vorne überragt und ein rückseitiger Abschnitt (22a) des Einspritzkolbens (22) geringeren Durchmessers als der vorderseitige Abschnitt (22c) einen rückseitigen Zylinderdeckel (21b) durchgreift, der mittels Außengewinde (21b'') mit einem Innengewinde des Zylinders (21) im Eingriff steht und mit einem Radialflansch (21b' ) die rückwärtige Stirnfläche des Zylinders (21) vollständig übergreift.

6. Kunststoff-Spritzgießeinheit nach Anspruch 5, dadurch gekennzeichnet, daß zur Fixierung der Gewindegänge zwischen Zylinder (21) und Zylinderdeckel (21b) je etwa auf einer Kreislinie im Radialflansch (21b') angeordnete Gewindebolzen (24') vorgesehen sind, wobei durch unterschiedlich starkes Anziehen einzelner Gewindebolzen gegebenenfalls in entgegengesetzter Richtung die Koaxialität der Achse des Zylinderdeckels (21b) zur Achse des Zylinders (21) durch unterschiedliche Verkeilung der Gewindegänge entlang der Kreislinie veränderbar ist.

## Claims

1. Plastics material injection moulding unit having a carrier block (10), which accommodates the plasticising cylinder (17) and has at least one bore (14; 13), which extends parallel to the injection axis (s-s) and is provided with an internal thread, a cylindrical, hydraulic drive unit (A; E), which is accommodated in the bore (14; 13) and engages with the internal thread of the bore (14; 13) via an external thread, the axis of the drive unit (A; E) forming an angle of deviation corresponding to a deviation from the coaxial position relative to the axis (n-n; m-m) of the bore, such deviation being caused by a pivot moment, and a means for securing the drive unit (A; E) in the bore (14; 13), which means wedges together the pitches of the internal and external threads by means of at least one threaded pin (124; 24), characterised in that the means for securing the drive unit (A; E) in the bore (14; 13) includes threaded pins (124; 24), which are disposed approximately parallel to the injection axis (s-s) substantially on a circle around the axis (m-m; n-n) of the bore (14; 13), the pitches of the internal thread of the bore (14; 13) and of the external thread of the drive unit (A; E) being wedgeable together to a variable extent in order to change the angle of deviation along the circle by variably tightening individual threaded pins (124; 24), possibly in opposite directions.

2. Plastics material injection moulding unit according to claim 1, characterised in that two drive units (A) for displacing the injection moulding unit on guide rods (19), which are axially fixed and serve as piston rods, are accommodated in the bores (14), which drive units (A) protrude beyond the carrier block (10) both at their front end and at their rear end, the threaded pins (124) associated with one drive unit (A) engaging with a threaded ring (39), which is supported on the cylinder (20) of the drive unit (A), and abutting with their end edges against the carrier block (10) (Figs. 5, 7).

3. Plastics material injection moulding unit according to claim 2, characterised in that the threaded ring (39) engages with the external thread (20c) of the cylinder (20) by means of an internal thread (39b), and the end edges (124d) of the threaded pins (124) extend into recesses (124e) in the end face (10h) of the carrier block (10).

4. Plastics material injection moulding unit according to claim 1, characterised in that two hydraulic drive units (E) for axially displacing the screw conveyor in the plasticising cylinder (17) each extend into a portion of the associated bore (13) with a front end portion provided with the external thread (21f), and the end faces (21a) of the cylinders (21) of the drive units (E) are each overlapped by an internal flange (10f) of the carrier block (10), the threaded pins (24) engaging with these internal flanges (10f) and abutting with their end edges (24d) against the end faces (21a) of the cylinders (21) (Figs. 6, 8).

5. Plastics material injection moulding unit according to one of claims 1 or 4, characterised in that a front portion (22c) of an injection piston (22) of the drive unit (E) for axially displacing the screw conveyor in the plasticising cylinder (17), which piston is disposed in the cylinder (21), protrudes forwardly beyond the end face (10h) of the carrier block (10), and a rear portion (22a) of the injection piston (22), having a smaller diameter than the front portion (22c), extends through a rear cylinder cover (21b), which engages with an internal thread of the cylinder (21) by means of external thread (21b'') and completely overlaps the rear end face of the cylinder (21) with a radial flange (21b').

6. Plastics material injection moulding unit according to claim 5, characterised in that, in order to secure the thread pitches between cylinder (21) and cylinder cover (21b), threaded pins (24') are provided, each being disposed substantially on a circle in the radial flange (21b'), the coaxial position of the axis of the cylinder cover (21b) relative to the axis of the cylinder (21) being variable along the circle by variably tightening individual threaded pins, possibly in opposite directions, as a result of variably wedging together the thread pitches.

## Revendications

1. Unité de moulage de matière plastique par injection, comprenant un bloc porteur (10) qui reçoit le cylindre de ramollissement (17) et qui présente au moins un perçage (14 ; 13) parallèle à l'axe d'injection (s-s) et pourvu d'un filetage intérieur, comprenant une unité d'entraînement hydraulique cylindrique (A ; E) qui est reçue dans le perçage (14 ; 13) et qui est en prise avec le filetage intérieur du perçage (14 ; 13) par l'intermédiaire d'un filetage extérieur, cependant que l'axe de l'unité d'entraînement (A ; E) présente un écart angulaire par rapport à l'axe (n-n ; m-m) du perçage, lequel correspond à un écart par rapport à la position coaxiale causé par un couple de basculement, et comprenant un dispositif qui est destiné à fixer l'unité d'entraînement (A ; E) dans le perçage (14 ; 13) et qui coince mutuellement les filets de vis des filetages intérieurs et extérieurs au moyen d'un goujon fileté au moins (124 ; 24), caractérisée par le fait que le dispositif destiné à fixer l'unité d'entraînement (A ; E) dans le perçage (14 ; 13) comprend des goujons filetés (124 ; 24) qui sont disposés d'une manière approximativement parallèle à l'axe d'injection (s-s) et à peu près sur un cercle entourant l'axe (n-n ; m-m) du perçage (14 ; 13), cependant qu'en vissant plus ou moins fortement les divers goujons filetés (124 ; 24), le cas échéant dans des directions opposées, les filets de vis du filetage intérieur du perçage (14 ; 13) et ceux du filetage extérieur de l'unité d'entraînement (A ; E) peuvent être coincés différemment afin de modifier l'écart angulaire le long du cercle.

2. Unité de moulage de matière plastique par injection selon la revendication 1, caractérisée par le fait que deux unités d'entraînement (A) sont reçues dans les perçages (14) pour déplacer l'unité de moulage par injection sur des tiges de guidage (19) qui sont fixes dans le sens axial et qui servent de tiges de piston, ces unités d'entraînement (A) faisant saillie hors du bloc porteur (10) tant à l'avant qu'à l'arrière, cependant que les goujons filetés (124) qui sont associés à une unité d'entraînement (A) sont en prise avec une couronne filetée (39) appuyée contre le cylindre (20) de l'unité d'entraînement (A), et qu'ils portent par leurs côtés frontaux sur le bloc porteur (10) (figures 5 et 7).

3. Unité de moulage de matière plastique par injection selon la revendication 2, caractérisée par le fait que la couronne filetée (39) est en prise avec le filetage extérieur (20c) du cylindre (20) au moyen d'un filetage intérieur (39b), et que les bords frontaux (124d) du goujon fileté (124) pénètrent dans des renfoncements (124e) ménagés dans le bloc porteur (10), sur la surface frontale (10h) de celui-ci.

4. Unité de moulage de matière plastique par injection selon la revendication 1, caractérisée par le fait que deux unités d'entraînement hydrauliques (E) destinées à déplacer axialement la vis sans fin d'alimentation dans le cylindre de ramollissement (17) pénètrent chacune dans une partie du perçage associé (13) par une partie extrême antérieure qui est pourvue du filetage extérieur (21f), et que les surfaces frontales (21a) des cylindres (21) des unités d'entraînement (E) sont chacune recouvertes par une bride intérieure (10f) du bloc porteur (10), cependant que les goujons filetés (24) sont en prise avec ces brides intérieures (10f), et qu'ils portent par leurs bords frontaux (24d) sur les surfaces frontales (21a) des cylindres (21) (figures 6 et 8).

5. Unité de moulage de matière plastique par injection selon l'une des revendications 1 et 4, caractérisée par le fait qu'une partie antérieure (22c) d'un piston d'injection (22) qui est disposé dans le cylindre (21) et qui appartient à l'unité d'entraînement (E) destinée à déplacer axialement la vis sans fin d'alimentation dans le cylindre de ramollissement (17) dépasse vers l'avant la surface frontale (10h) du bloc porteur (10), et qu'une partie postérieure (22a) du piston d'injection (22) dont le diamètre est plus faible que celui de la partie antérieure (22c) traverse un couvercle de cylindre arrière (21b) qui est en prise avec un filetage intérieur du cylindre (21) au moyen d'un filetage extérieur (21b'') et qui recouvre complètement la surface frontale arrière du cylindre (21) par une bride radiale (21b').

6. Unité de moulage de matière plastique par injection selon la revendication 5, caractérisée par le fait que, pour fixer les filetages du cylindre (21) par rapport à ceux du couvercle de cylindre (21b), il est prévu des goujons filetés (24') qui sont disposés chacun à peu près sur un cercle dans la bride radiale (21b'), cependant qu'en vissant plus ou moins fortement les divers goujons filetés, le cas échéant dans des directions opposées, on peut modifier l'écart par rapport à la position coaxiale de l'axe du couvercle de cylindre (21b) par rapport à l'axe du cylindre (21) par un coincement différent des filetages le long du cercle.
